# EUROPEAN PATENT SPECIFICATION

(11) **EP 2 867 555 B1**
(45) Date of publication and mention of the grant of the patent: **20.09.2017**
(21) Application number: 13747523.2
(22) Date of filing: 01.07.2013
(51) Int. Cl.: F16D 7/04, F16D 43/202, F16D 43/286

(54) **MECHANICAL JOINT WITH TORQUE LIMITER**
MECHANISCHE VERBINDUNG MIT DREHMOMENTBEGRENZER
JOINT MÉCANIQUE DOTÉ D'UN LIMITEUR DE COUPLE

(30) Priority: 02.07.2012 IT MI20121164
(43) Date of publication of application: 06.05.2015
(73) Proprietor: CAEB International S.r.l., 20121 Milan (IT)
(72) Inventor: ROTA, Guido, I-24010 Sorisole - BG (IT)
(74) Representative: Simino, Massimo
(86) International application number: PCT/IB2013/055385
(87) International publication number: WO 2014/006553

(56) References cited:
- GB-A- 544 230
- US-A- 2 408 501
- US-A- 2 932 276
- US-A- 3 608 334
- US-A- 3 664 474
- US-A- 3 807 539
- US-A- 4 081 063

## Description

The present invention refers to a mechanical joint equipped with a torque limiter in accordance with the preamble of claim 1.

In mechanics, the use of joints equipped with torque limiting devices is widely known and used for many various applications, for example in the field of agricultural machines, mechanical transmissions in general or industry, in particular whenever it is necessary to transfer, to a user, a twisting moment having a pre-emptively defined predetermined maximum transmissible torque value.

Generally, mechanical torque limiters currently used foresee a torque limiting device formed by two concentric rotating parts, in which a first rotary part has locking cylinders that project radially from it and that are suitable for sliding radially from and towards an operative engagement position in which they engage the remaining rotary part so as to make it rotate as a unit with the first rotary part. More specifically, helicoidal springs provide for acting on the locking cylinders to push them with a predetermined elastic load required in the aforementioned operative engagement position. When a predetermined maximum transmissible twisting moment value is exceeded, which depends upon the predetermined elastic load with which the locking cylinders are kept in the aforementioned operative engagement position, the two rotating parts are no longer constrained to rotate as a unit, thus completely interrupting, or at least decreasing, the transmission of torque to the user.
Document US 3664474 A discloses an apparatus according to the pre-characterizing portion of claim 1.
Such devices, in spite of being efficient in terms of the limitation of the maximum transmissible twisting moment, are not without drawbacks. In particular:
- the presence of helicoidal springs makes the calibration of the limiting device difficult;
- even small variations in the dimensions, shape or materials of the springs can strongly affect the operation of the limiting device, indeed making it troublesome to have an industrial production of limiting devices with the same operation characteristics and
- repeated interventions of the limiting device generally cause malfunctioning or breaking of the helicoidal springs, with consequent failure of the joint itself.

Considering what has been outlined above it is clear how nowadays it is strongly desired to have a mechanical joint that is equipped with a torque limiter which, in addition to having a simple structure and being cost-effective, has a behaviour that is safe and durable, being easy to calibrate and keeping its operation characteristics unaltered over time, particularly with reference to the maximum torque value at which intervention is necessary.

The problem forming the basis of the present invention is thus that of devising a mechanical joint equipped with a torque limiter which has structural and functional characteristics such as to satisfy the aforementioned requirement and, at the same time, avoid the problems referred to with reference to the joints with torque limiter of the prior art.

Such a drawback is solved by a mechanical joint equipped with a torque limiter in accordance with claim 1.

Further features and advantages of the mechanical joint equipped with torque limiter according to the present invention shall become clearer from the following description of a preferred embodiment thereof, given as an indication and not for limiting purposes, with reference to the attached figures, in which:

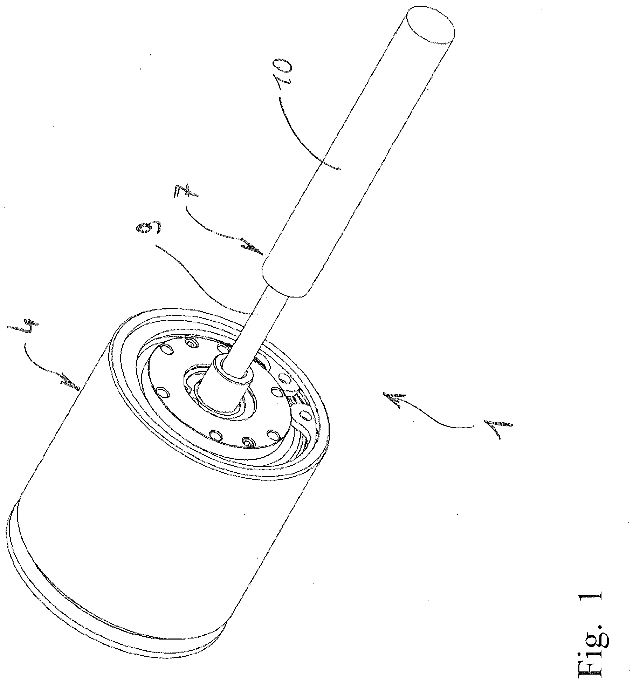

- figure 1 represents a simplified perspective view of a mechanical joint according to the invention equipped with a torque limiter;
- figure 2 represents a partially sectioned perspective view of the mechanical joint according to the invention;
- figure 3 represents an enlarged view of the portion enclosed by a circle in figure 2;
- figure 4 represents a flat side view of one top end of the mechanical joint according to the invention;
- figure 5 represents a longitudinal section view according to the line V-V of figure 4;
- figure 6 represents a longitudinal section view according to the line VI-VI of figure 5 with the mechanical joint in engaged configuration in which it transmits twisting moment;
- figure 7 represents a cross-section view according to the line VII-VII of figure 6;

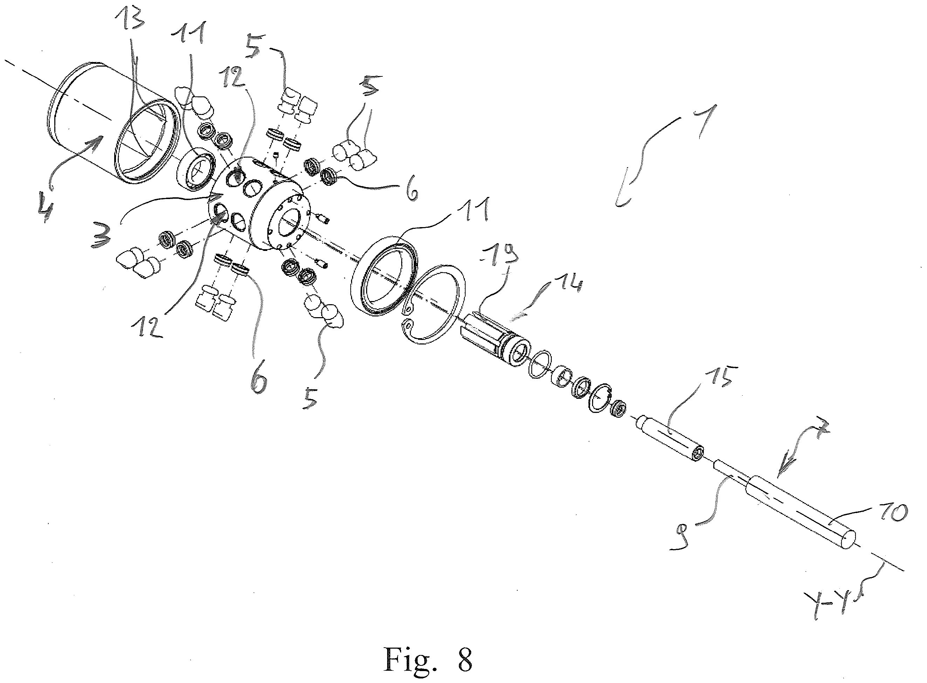

- figure 8 represents a simplified exploded perspective view of the mechanical joint according to the invention;
- figure 9 represents the view of figure 4 in a semi-section view with the mechanical joint in engaged configuration in which it transmits twisting moment;
- figure 10 represents a longitudinal section view according to the line with section X-X of figure 9;
- figure 11 represents an enlarged view of the portion enclosed by a circle in figure 10 with the hydraulic working liquid highlighted in black;
- figure 12 represents an enlarged view of a detail of figure 9 with the hydraulic working liquid highlighted in black;
- figure 13 represents the view of figure 9 with the mechanical joint in the triggered configuration in which it does not transmit twisting moment;
- figure 14 represents an enlarged view of the portion enclosed in a circle in figure 13 with the hydraulic working liquid highlighted in black;
- figure 15 represents a longitudinal section view according to the section line XV-XV of figure 13;
- figure 16 represents an enlargement of the portion enclosed by a circle in figure 15 with the hydraulic working liquid highlighted in black;
- figure 17 represents a longitudinal section view of the mechanical joint in the triggered configuration in which it does not transmit twisting moment;
- figure 18 represents a cross-section view according to the section line XVIII-XVIII of figure 17 and
- figure 19 represents a cross-section view according to the section line XIX-XIX of figure 17.

With reference to the attached figures, reference numeral 1 wholly indicates a mechanical joint according to the invention, equipped with a torque limiter.

The mechanical joint equipped with torque limiter 1 comprises a body 2, having a substantially cylindrical shape with a circular section of predetermined axis Y-Y, inside which a first rotary part 3 and a second rotary part 4 are housed.

The first rotary part 3 and the second rotary part 4 are supported by the body 2 so as to be able to rotate around said predetermined rotation axis Y-Y, in order to define motion input or motion output parts into/from the mechanical joint 1.

In accordance with the illustrated embodiment:
- the aforementioned first rotary part 3 is fixedly attached to a torque input shaft 16 into the mechanical joint 1, identifiable as motion receiving shaft and
- the aforementioned second rotary part 4 is fixedly attached to a motion output shaft 18 from the mechanical joint 1,
the shafts 16 and 18 extending aligned with one another along the aforementioned rotation axis Y-Y.

Concerning this, it is worth highlighting how, alternatively to what has been described, the use of transmission shafts or elements like a crown wheel and pinion and the like makes it possible to obtain a mechanical joint equipped with torque limiter in which the input shaft and the output shaft are not aligned and/or parallel to one another.

In the present description by "input shaft" of the mechanical joint we mean the shaft, or rather the rotary part, which is intended to receive the driving torque in inlet into the mechanical joint, whereas by "output shaft" or drive shaft we mean the shaft, or rather the rotary part, which is intended to provide the driving torque in outlet from the mechanical joint. When using the device as a rev limiter, the input shaft rotates faster with respect to the output shaft. Of course, when using the mechanical joint in the opposite direction the input and output shafts will be inverted one which other.

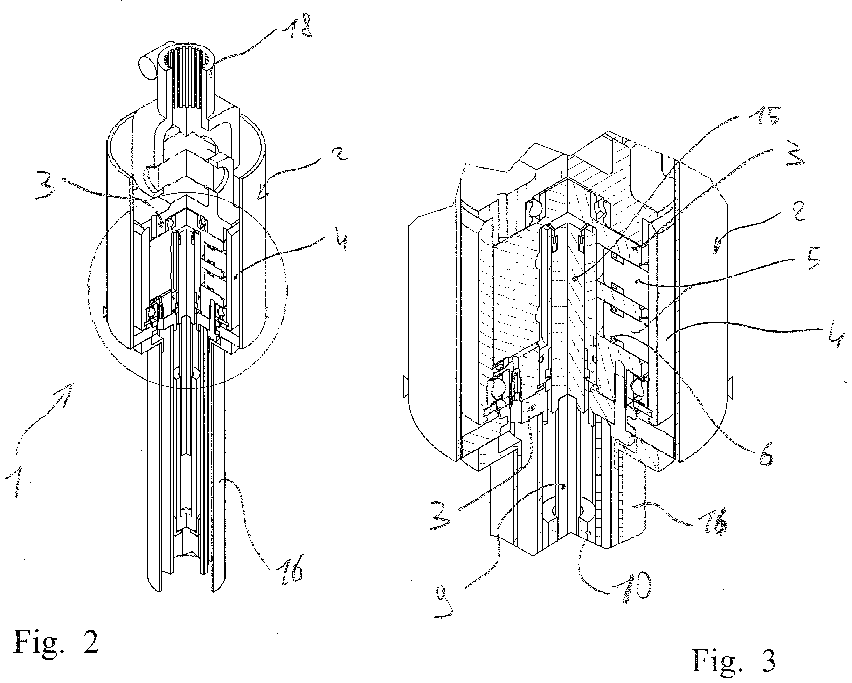

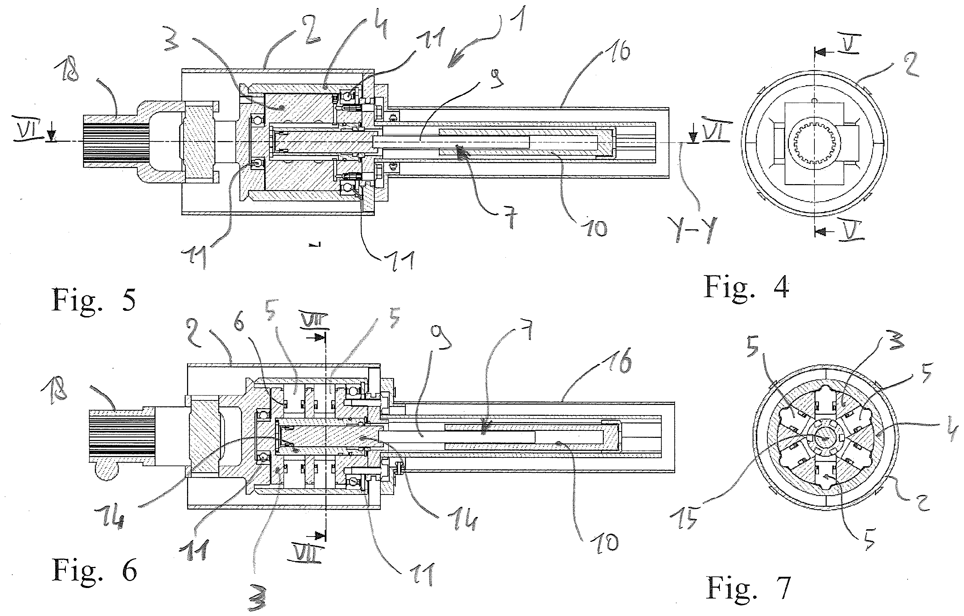

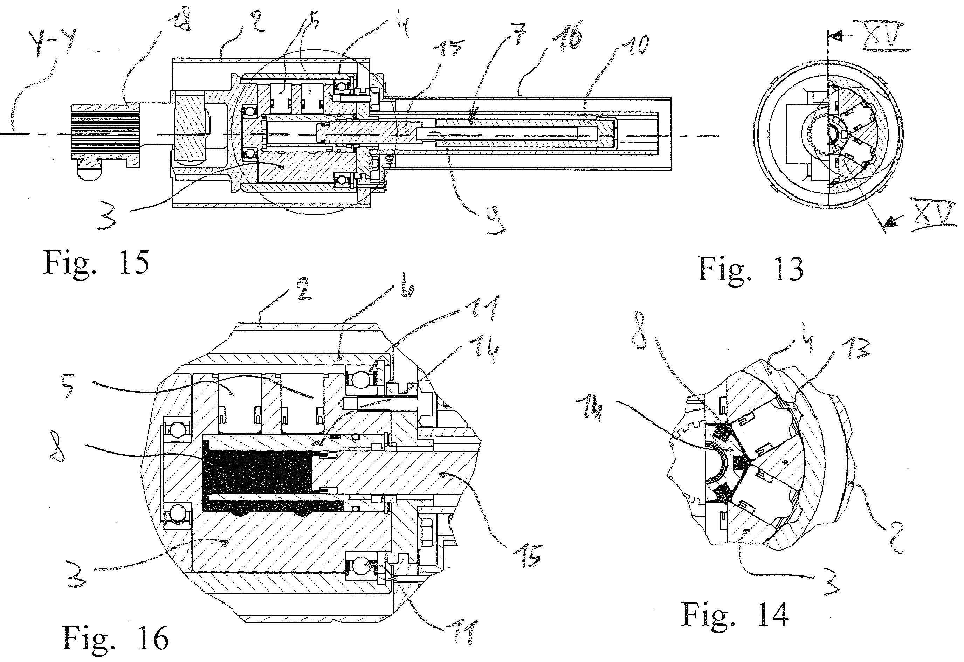

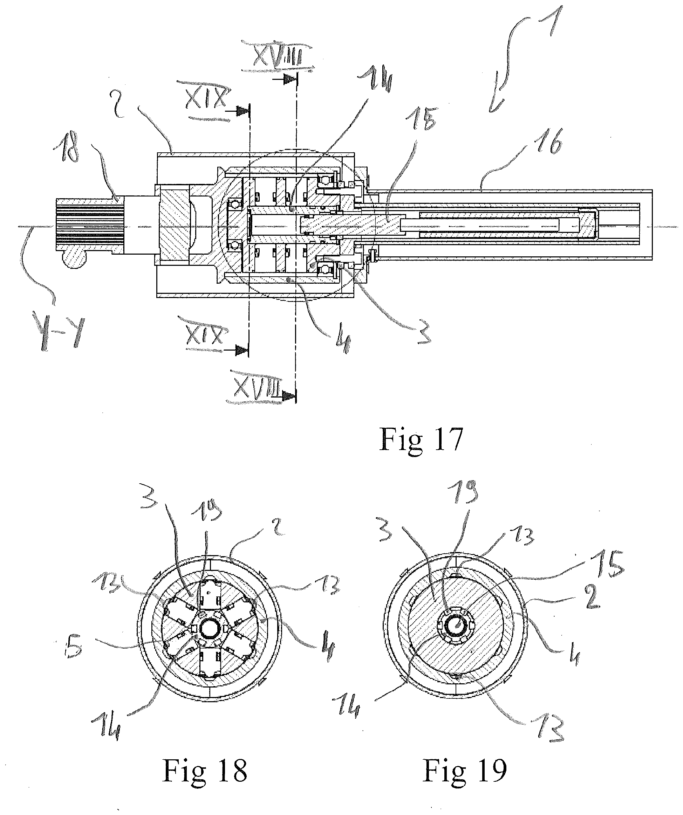

The first rotary part 3 comprises locking cylinders 5 that project transversally with respect to the respective rotation axis Y-Y. Such locking cylinders 5 are supported by the first rotary part 3 so as to be able to move between an operative engagement position (cf. figures 2, 3, 6, 7 and 9-12) in which they engage the second rotary part 4 so as to make it rotate as a unit with the first rotary part 3, and an operative disengaged position (cf. figures 13-19) in which they substantially do not engage said second rotary part 4 so as to make said second rotary part 4 substantially free in rotation with respect to said first rotary part 3.

The mechanical joint 1 comprises means for pushing the aforementioned locking cylinders 5 with a predetermined elastic load towards the aforementioned operative engagement position.

Preferably, the first rotary part 3 and the second rotary part 4 extend along the same rotation axis Y-Y, so as to be coaxial and concentric to one another.

In accordance with the embodiment illustrated, the first rotary part 3 is concentrically inserted inside said second rotary part 4 and comprises a tubular wall that is provided with radial holes 12.

Each radial hole 12 supports the radial sliding of a respective locking cylinder 5 according to a sealed coupling of the cylinder-piston type with the interposition of sealing gaskets 6.

The tubular inner wall of the second rotary part 4 has a plurality of longitudinal recesses 13 extending along the axis Y-Y and circumferentially offset by a pitch from one another, each longitudinal recess 13 being suitable for being engaged by the head of the aforementioned locking cylinders 5 when said locking cylinders 5 are in the aforementioned operative engagement position (cf. figures 2, 3, 6, 7 and 9-12).

In consideration of the aforementioned engagement that is achieved between the top end of the locking cylinders 5 and the longitudinal recesses 13, the second rotary part 4 rotates as a unit with the first rotary part 3, so that the mechanical joint 1 is in engaged condition in which it is suitable for transmitting in output all the torque received in input, except for an almost negligible fraction that is lost due to mechanical resistance and various friction. This condition lasts until the value of the torque in input exceeds a predetermined maximum torque value, at which, when reached/exceeded, the predetermined elastic load, with which the locking cylinders 5 are pushed towards said aforementioned operative engagement position (cf. figures 2, 3, 6, 7 and 9-12), is no longer sufficient for ensuring the engagement between the locking cylinders 5 and the longitudinal recesses 13. The mechanical joint 1 snaps into a triggered configuration in which the locking cylinders 5 are behind in the aforementioned operative disengaged position (cf. figures 13-19) and the torque in input in the mechanical joint 1 is no longer transmitted in output to the user.

According to the invention, the aforementioned means for pushing the locking cylinders 5 with a predetermined elastic load towards said operative engagement position comprise:
- hydraulic actuation means in which a hydraulic circuit contains a hydraulic working liquid 8 that acts upon the aforementioned locking cylinders 5 to push them towards said operative engagement position (cf. figures 2, 3, 6, 7 and 9-12);
- gasket means 6 to prevent pressurised hydraulic working liquid 8 from leaking from the hydraulic circuit and
- pressing means 7 to place the hydraulic working liquid 8 in the aforementioned hydraulic circuit under pressure with a predetermined pressure value.

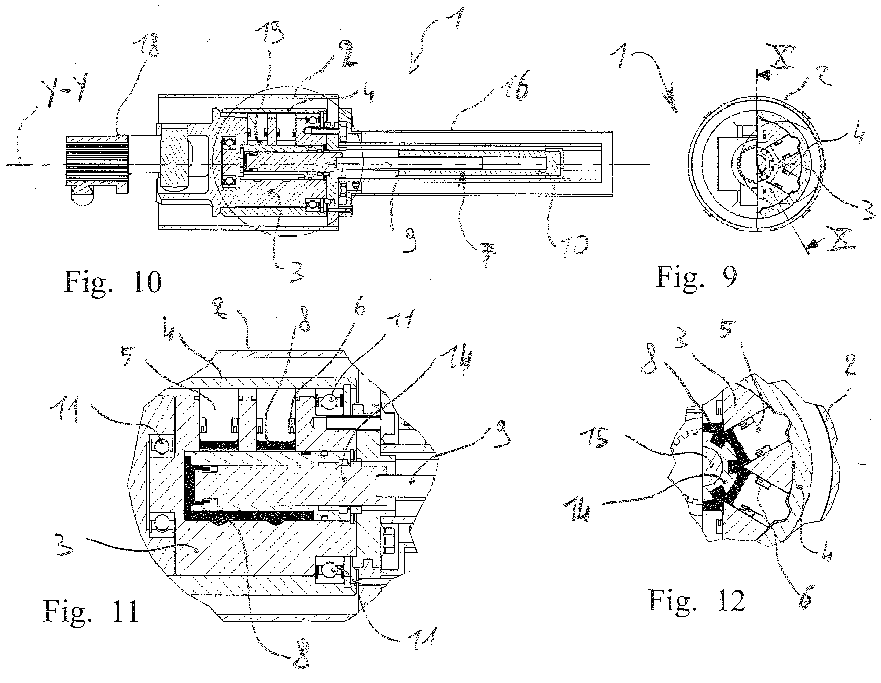

With reference to figures 11, 12 14 and 16 it is worth highlighting how, in these, the working fluid is represented coloured in black.

The aforementioned pressing means 7 for putting the hydraulic working liquid 8 in said hydraulic circuit under pressure comprise elastic actuation means, like for example a spring.

In accordance with the preferred embodiment illustrated, the aforementioned pressing means 7 to put under pressure the hydraulic working liquid 8 preferably comprise a gas spring 7 in which a mobile piston 9 coming out from a body 10 containing pressurised gas acts on the hydraulic working liquid 8 contained in the aforementioned hydraulic circuit to keep it under pressure with a predetermined working load.

Preferably, the gas spring extends along the rotation axis Y-Y at a top end of said containment body 2, in the example as an extension of the first rotary part 3.

In particular, the gas spring is advantageously housed inside the shaft 16 that is connected so as to rotate as a unit with the first rotary part 3.

It is worth highlighting how the use of a gas spring instead of a conventional spring, for example a helicoidal spring with large dimensions, is advantageous for various aspects. In particular, the gas spring is easy to calibrate and to set to provide a predetermined pushing force, for example of 80 Kg, thus ensuring that the thrust provided through the piston 9 to the hydraulic working fluid 8 is constant even after a very large number of actuations and with different operation temperatures, also in consideration of the fact that gas springs use nitrogen as their gas.

Furthermore, a particular advantage obtained with the use of gas springs can be identified in the characteristic of such springs being able to be damped since the outward movement of the mobile piston 9 from the body 10 of the gas spring is damped. This is useful since, when the mechanical joint is in the "triggered" condition and the input torque returns to be lower than the predetermined maximum transmissible value, the passage of the mechanical joint into the "engaged" configuration does not occur instantaneously, but rather in a soft and gradual manner, with a correct "meshing" of the top end of the locking cylinders 5 inside the longitudinal recesses 13. This makes it possible to avoid ruining the ends of the locking cylinders 5 or the longitudinal recesses 13, ensuring a gradual engagement of the locking cylinders 5 inside the longitudinal recesses 13.

With reference to the structure of the mechanical joint 1 described above it is worth highlighting that, in accordance with the illustrated embodiment:
- the aforementioned hydraulic circuit is defined between the aforementioned tubular wall equipped with radial holes 12 of the first rotary part 3 and a hollow hub 14 positioned inside the tubular wall equipped with radial holes 12;
- the hollow hub 14 comprises an outer wall that is equipped with longitudinal grooves 19 in order to allow the flow of hydraulic working liquid 8 along the entire axial length of the aforementioned tubular wall equipped with radial holes 12 of the first rotary part 3;
- fluid passages are arranged to put in fluid communication the inner cavity of the hollow hub 14 and the gap defined between the hollow hub 14 with the tubular wall equipped with radial holes 12;
- a mobile piston 15 actuated by the aforementioned pressing means 7 is slidably inserted inside said hollow hub with cylinder/piston sealed coupling and
- the mobile piston 15 is inserted in the hollow hub 14 from a first top end of the hollow hub whereas the aforementioned fluid passages are formed at the opposite top end of the hollow hub 14.

Preferably, the first rotary part 3 and the second rotary part 4 are supported in rotation in the containment body 2 through centring bearings 11, which are preferably positioned at the opposite top ends of the first rotary part 3 and of the second rotary part 4.

The containment body 2 is equipped with openings for the introduction and discharge of hydraulic working liquid, as well as openings for allowing air to be flushed from the circuit during the filling step.

As can be appreciated from the present description, the mechanical joint equipped with torque limiter according to the invention makes it possible to satisfy the aforementioned requirement while at the same time avoiding the drawbacks referred to in the introduction of the present description.

Indeed, although the particular structure of the mechanical joint, equipped with torque limiter according to the invention, is compact and made up of a small number of parts, it makes it possible to avoid the malfunctioning that can occur in known devices due to the presence of the helicoidal springs that act directly on the locking cylinders.

Furthermore, the presence of the gas spring as a replacement of the helicoidal springs improves the operation of the mechanical joint according to the invention for the reasons that have been previously highlighted.

A further advantage of the mechanical joint equipped with a torque limiter according to the invention lies in the simplicity of the structural solution adopted which ensures the correct operation thereof without requiring onerous maintenance operations.

Of course, a man skilled in the art, with the purpose of satisfying contingent and specific requirements, can carry out numerous modifications and variants to the mechanical joint equipped with torque limiter described above, all moreover covered by the scope of protection of the invention as defined by the following claims.

## Claims

1. Mechanical joint with torque limiter comprising a containment body (2), a first rotary part (3) and a second rotary part (4), said first rotary part (3) and second rotary part (4) being supported by said body (2) so as to be able to rotate about a respective predetermined rotation axis (Y-Y) and defining motion input part or motion output part into/from said mechanical joint, wherein:
- said first rotary part (3) comprises locking cylinders (5) projecting transversally to the respective rotation axis (Y-Y);
- said locking cylinders (5) are supported by said first rotary part (3) so as to be able to move between an operative engagement position, in which said locking cylinders (5) engage the second rotary part (4) so as to make it rotate as a unit with the first rotary part (3), and an operative disengaged position in which substantially said locking cylinders (5) do not engage said second rotary part (4) making said second rotary part (4) substantially free in rotation with respect to said first rotary part (3);
- said joint comprises means for pushing said locking cylinders (5) with a predetermined elastic load towards said operative engagement position, wherein said means for pushing said locking cylinders (5) with a predetermined elastic load towards said operative engagement position comprise:
- hydraulic actuation means in which a hydraulic circuit contains a hydraulic working liquid (8) that acts on said locking cylinders (5) to push said locking cylinders (5) towards said operative engagement position;
- gasket means (6) to prevent pressurised liquid from leaking from said hydraulic circuit and
- pressing means (7) to place the hydraulic working liquid (8) in said hydraulic circuit under pressure with a predetermined pressure value,
**characterised in that** said pressing means (7) to put the hydraulic working liquid (8) in said hydraulic circuit under pressure comprise a gas spring (7) in which a mobile piston (9) comes out from a body (10) containing pressurised gas acts on the hydraulic working liquid (8) of said hydraulic circuit to keep it under pressure with a predetermined load.

2. Mechanical joint according to claim 1, wherein said pressing means (7) for putting the hydraulic working liquid (8) in said hydraulic circuit under pressure comprise elastic actuation means.

3. Mechanical joint according to claim 1, wherein said gas spring extends along said rotation axis (Y-Y) at a top end of said containment body (2).

4. Mechanical joint according to claims 1 or 4, wherein the coming out of the mobile piston (9) from the body (10) of said gas spring is damped in order to allow said locking cylinders (5) to move slowly from said operative disengaged position to said operative engagement position.

5. Mechanical joint according to any one of claims 1 to 4, wherein said first rotary part (3) and said second rotary part (4) are supported in rotation in said containment body (2) through centring bearings (11).

6. Mechanical joint according to claim 5, wherein said centring bearings (11) are positioned at opposite top ends of said first rotary part (3) and of said second rotary part (4).

7. Mechanical joint according to any one of claims 1 to 6, wherein said first rotary part (3) and said second rotary part (4) extend along the same rotation axis (Y-Y).

8. Mechanical joint according to claim 7, wherein said first rotary part (3) and said second rotary part (4) are coaxial and concentric to one another.

9. Mechanical joint according to claim 8, wherein:
- said first rotary part (3) is concentrically inserted inside said second rotary part (4);
- said first rotary part comprises a tubular wall equipped with radial holes (12), each radial hole (12) supporting the radial sliding of a respective locking cylinder (5) through interposition of a sealing gasket;
- the tubular inner wall of said second rotary part (4) has a plurality of longitudinal recesses (13) extending parallel to said rotation axis (Y-Y) and circumferentially offset by a pitch from one another, each longitudinal recess (13) being suitable for being engaged by the head of said locking cylinders (5) when positioned in said operative engagement position.

10. Mechanical joint according to claim 9, wherein:
- said hydraulic circuit is defined between said tubular wall equipped with radial holes (12) of said first rotary part (3) and a hollow hub (14) positioned inside said tubular wall equipped with radial holes (12);
- said hollow hub (14) comprises an outer wall equipped with longitudinal grooves (19) to allow the flow of hydraulic working liquid (8) along the entire axial length of said tubular wall equipped with radial holes (12) of said first rotary part (3);
- fluid passages are arranged to put in fluid communication the inner cavity of said hollow hub (14) and the gap defined between said hollow hub (14) with said tubular wall equipped with radial holes (12);
- a mobile piston (15) actuated by said pressing means (7) is slidably inserted inside said hollow hub with cylinder/piston sealed coupling and
- said mobile piston being inserted in said hollow hub (14) from a first top end and said fluid passages are formed at the opposite top end of said hollow hub (14).

## Patentansprüche

1. Mechanisches Verbindung mit Drehmomentbegrenzer, die einen Gehäusekörper (2), ein erstes drehendes Teil (3) und ein zweites drehendes Teil (4) umfasst, wobei das erste drehende Teil (3) und zweite drehende Teil (4) durch den Körper (2) gehalten werden, um in der Lage zu sein, um eine entsprechende vorgegebene Drehachse (Y-Y) zu drehen, und eine Eingangsteilbewegung oder Ausgangsteilbewegung in die / aus der mechanischen Verbindung definieren, wobei:
- das erste drehende Teil (3) Verriegelungszylinder (5) umfasst, die quer zu der entsprechenden Drehachse (Y-Y) vorspringen;
- die Verriegelungszylinder (5) durch das erste drehende Teil (3) gehalten werden, um in der Lage zu sein, sich zwischen einer betriebsmäßigen Einrastposition, in der die Verriegelungszylinder (5) mit dem zweiten drehenden Teil (4) einrasten, um es als eine Einheit mit dem ersten drehenden Teil (3) zu drehen, und einer betriebsmäßigen Ausrastposition zu bewegen, in der die Verriegelungszylinder (5) im Wesentlichen mit dem zweiten drehenden Teil (4) nicht einrasten, wobei sie das zweite drehende Teil (4) bezüglich des ersten drehenden Teils (3) im Wesentlichen frei in Drehung bringen;
- die Verbindung Mittel zum Drücken der Verriegelungszylinder (5) mit einer vorgegebenen federnden Last in Richtung der betriebsmäßigen Einrastposition umfasst,
wobei die Mittel zum Drücken der Verriegelungszylinder (5) mit einer vorgegebenen federnden Last in Richtung der betriebsmäßigen Einrastposition umfassen:
- hydraulische Betätigungsmittel, in denen ein Hydraulikkreis eine hydraulische Arbeitsflüssigkeit (8) enthält, die auf die Verriegelungszylinder (5) wirkt, um die Verriegelungszylinder (5) in Richtung der betriebsmäßigen Einrastposition zu drücken;
- Dichtungsmittel (6), um unter Druck stehende Flüssigkeit zu hindern, aus dem Hydraulikkreis auszutreten und
- Druckmittel (7), um die hydraulische Arbeitsflüssigkeit (8) in dem Hydraulikkreis mit einem vorgegebenen Druckwert unter Druck zu setzen, **dadurch gekennzeichnet, dass** die Druckmittel (7), um die hydraulische Arbeitsflüssigkeit (8) in dem Hydraulikkreis unter Druck zu setzen, eine Gasfeder (7) umfassen, in der ein beweglicher Kolben (9) aus einem Körper (10) austritt, der unter Druck stehendes Gas enthält, das auf die hydraulische Arbeitsflüssigkeit (8) des Hydraulikkreises wirkt, um es mit einer vorgegebenen Last unter Druck zu halten.

2. Mechanische Verbindung nach Anspruch 1, wobei die Druckmittel (7), um die hydraulische Arbeitsflüssigkeit (8) in dem Hydraulikkreis unter Druck zu setzen, federnde Betätigungsmittel umfassen.

3. Mechanische Verbindung nach Anspruch 1, wobei die Gasfeder sich entlang der Drehachse (Y-Y) an einem oberen Ende des Gehäusekörpers (2) erstreckt.

4. Mechanische Verbindung nach Anspruch 1 oder 4, wobei das Austreten des beweglichen Kolbens (9) aus dem Körper (10) der Gasfeder gedämpft wird, um den Verriegelungszylindern (5) zu ermöglichen, sich langsam aus der betriebsmäßig ausgerasteten Position zu der betriebsmäßigen Einrastposition zu bewegen.

5. Mechanische Verbindung nach einem der Ansprüche 1 bis 4, wobei das erste drehende Teil (3) und das zweite drehende Teil (4) durch Zentrierlager (11) in dem Gehäusekörper (2) in Drehung gehalten werden.

6. Mechanische Verbindung nach Anspruch 5, wobei die Zentrierlager (11) an gegenüberliegenden oberen Enden des ersten drehenden Teils (3) und des zweiten drehenden Teils (4) positioniert werden.

7. Mechanische Verbindung nach einem der Ansprüche 1 bis 6, wobei sich das erste drehende Teil (3) und das zweite drehende Teil (4) entlang derselben Drehachse (Y-Y) erstrecken.

8. Mechanische Verbindung nach Anspruch 7, wobei das erste drehende Teil (3) und das zweite drehende Teil (4) miteinander koaxial und konzentrisch sind.

9. Mechanische Verbindung nach Anspruch 8, wobei:
- das erste drehende Teil (3) innerhalb des zweiten drehenden Teils (4) konzentrisch eingefügt wird;
- das erste drehende Teil eine Rohrwand umfasst, die mit Radialbohrungen (12) ausgerüstet wird, wobei jede Radialbohrung (12) das radiale Gleiten eines entsprechenden Verriegelungszylinders (5) durch Zwischenschaltung einer Dichtung unterstützt;
- die Rohrinnenwand des zweiten drehenden Teils (4) eine Vielzahl von Längsaussparungen (13) hat, die sich parallel zu der Drehachse (Y-Y) erstrecken und umlaufend durch einen Abstand voneinander versetzt werden, wobei jede Längsaussparung (13) geeignet ist, um durch den Kopf der Verriegelungszylinder (5) eingerastet zu werden, wenn sie in der betriebsmäßigen Einrastposition positioniert wird.

10. Mechanische Verbindung nach Anspruch 9, wobei:
- der Hydraulikkreis zwischen der mit Radialbohrungen (12) des ersten drehenden Teils (3) ausgerüsteten Rohrwand und einer Hohlnabe (14) definiert wird, die innerhalb der mit Radialbohrungen (12) ausgerüsteten Rohrwand positioniert wird;
wobei die Hohlnabe (14) eine mit Längsnuten (19) ausgerüstete Außenwand umfasst, um die Strömung von hydraulischer Arbeitsflüssigkeit (8) entlang der gesamten axialen Länge der mit Radialbohrungen (12) des ersten drehenden Teils (3) ausgerüsteten Rohrwand zu ermöglichen;
- Flüssigkeitsdurchführungen angeordnet werden, um den Innenhohlraum der Hohlnabe (14) und den zwischen der Hohlnabe (14) und der Rohrwand definierten, mit Radialbohrungen (12) ausgerüsteten Spalt in Flüssigkeitsverbindung zu setzen;
- ein durch die Druckmittel (7) betätigter beweglicher Kolben (15) verschiebbar innerhalb der Hohlnabe durch Zylinder/Kolben-gedichtetes Kuppelneingefügt wird und
- wobei der bewegliche Kolben in der Hohlnabe (14) von einem ersten oberen Ende eingefügt wird und die Flüssigkeitsdurchführungen an dem gegenüberliegenden oberen Ende der Hohlnabe (14) gebildet werden.

## Revendications

1. Joint mécanique avec limiteur de couple comprenant un corps de confinement (2), une première partie rotative (3) et une deuxième partie rotative (4), lesdites première partie rotative (3) et deuxième partie rotative (4) étant supportées par ledit corps (2) de manière à être capables de tourner autour d'un axe de rotation prédéterminé respectif (Y-Y) et définissant une partie d'entrée de mouvement ou une partie de sortie de mouvement dans/à partir dudit joint mécanique, dans lequel :
- ladite première partie rotative (3) comprend des cylindres de verrouillage (5) faisant saillie transversalement par rapport à l'axe de rotation respectif (Y-Y) ;
- lesdits cylindres de verrouillage (5) sont supportés par ladite première partie rotative (3) de manière à être capable de se déplacer entre une position d'engagement fonctionnel, dans laquelle lesdits cylindres de verrouillage (5) engagent la deuxième partie rotative (4) de manière à la faire tourner comme une unité avec la première partie rotative (3), et une position de désengagement fonctionnel dans laquelle lesdits cylindres de verrouillage (5) n'engagent sensiblement pas ladite deuxième partie rotative (4) en rendant ladite deuxième partie rotative (4) sensiblement libre en rotation par rapport à ladite première partie rotative (3) ;
- ledit joint comprend des moyens pour pousser lesdits cylindres de verrouillage (5) avec une charge élastique prédéterminée vers ladite position d'engagement fonctionnel,
dans lequel lesdits moyens pour pousser lesdits cylindres de verrouillage (5) avec une charge élastique prédéterminée vers ladite position d'engagement fonctionnel comprennent :
- des moyens d'actionnement hydrauliques dans lesquels un circuit hydraulique contient un liquide de travail hydraulique (8) qui agit sur lesdits cylindres de verrouillage (5) pour pousser lesdits cylindres de verrouillage (5) vers ladite position d'engagement fonctionnel ;
- des moyens d'étanchéité (6) pour empêcher le liquide sous pression de s'échapper dudit circuit hydraulique et
- des moyens de pression (7) pour mettre sous pression le liquide de travail hydraulique (8) dans ledit circuit hydraulique avec une valeur de pression prédéterminée,
**caractérisé en ce que** lesdits moyens de pression (7) pour mettre sous pression le liquide de travail hydraulique (8) dans ledit circuit hydraulique comprennent un ressort à gaz (7) dans lequel un piston mobile (9) sort d'un corps (10) contenant un gaz sous pression et agit sur le liquide de travail hydraulique (8) dudit circuit hydraulique pour le maintenir sous pression avec une charge prédéterminée.

2. Joint mécanique selon la revendication 1, dans lequel lesdits moyens de pression (7) pour mettre sous pression le liquide de travail hydraulique (8) dans ledit circuit hydraulique comprennent des moyens d'actionnement élastiques.

3. Joint mécanique selon la revendication 1, dans lequel ledit ressort à gaz s'étend suivant ledit axe de rotation (Y-Y) au niveau d'une extrémité supérieure dudit corps de confinement (2).

4. Joint mécanique selon les revendications 1 ou 4, dans lequel la sortie du piston mobile (9) hors du corps (10) dudit ressort à gaz est amortie de manière à permettre auxdits cylindres de verrouillage (5) de se déplacer lentement de ladite position de désengagement fonctionnel à ladite position d'engagement fonctionnel.

5. Joint mécanique selon l'une quelconque des revendications 1 à 4, dans lequel ladite première partie rotative (3) et ladite deuxième partie rotative (4) sont supportées en rotation dans ledit corps de confinement (2) par l'intermédiaire de paliers de centrage (11).

6. Joint mécanique selon la revendication 5, dans lequel lesdits paliers de centrage (11) sont positionnés à des extrémités supérieures opposées de ladite première partie rotative (3) et de ladite deuxième partie rotative (4).

7. Joint mécanique selon l'une quelconque des revendications 1 à 6, dans lequel ladite première partie rotative (3) et ladite deuxième partie rotative (4) s'étendent suivant le même axe de rotation (Y-Y).

8. Joint mécanique selon la revendication 7, dans lequel ladite première partie rotative (3) et ladite deuxième partie rotative (4) sont coaxiales et concentriques l'une avec l'autre.

9. Joint mécanique selon la revendication 8, dans lequel :
- ladite première partie rotative (3) est insérée de manière concentrique dans ladite deuxième partie rotative (4) ;
- ladite première partie rotative comprend une paroi tubulaire munie de trous radiaux (12), chaque trou radial (12) supportant le coulissement radial d'un cylindre de verrouillage respectif (5) par le biais de l'interposition d'un joint d'étanchéité ;
- la paroi tubulaire intérieure de ladite deuxième partie rotative (4) a une pluralité d'évidements longitudinaux (13) s'étendant parallèlement audit axe de rotation (Y-Y) et décalés de manière circonférentielle entre eux d'un pas, chaque évidement longitudinal (13) étant adapté pour être engagé par la tête desdits cylindres de verrouillage (5) quand ils sont positionnés dans ladite position d'engagement fonctionnel.

10. Joint mécanique selon la revendication 9, dans lequel :
- ledit circuit hydraulique est défini entre ladite paroi tubulaire munie de trous radiaux (12) de ladite première partie rotative (3) et un moyeu creux (14) positionné à l'intérieur de ladite paroi tubulaire munie de trous radiaux (12) ;
- ledit moyeu creux (14) comprend une paroi extérieure munie de rainures longitudinales (19) pour permettre l'écoulement de liquide de travail hydraulique (8) le long de toute la longueur axiale de ladite paroi tubulaire munie de trous radiaux (12) de ladite première partie rotative (3) ;
- des passages de fluide sont agencés pour mettre en communication de fluide la cavité intérieure dudit moyeu creux (14) et l'interstice formé entre ledit moyeu creux (14) et ladite paroi tubulaire munie de trous radiaux (12) ;
- un piston mobile (15) actionné par lesdits moyens de pression (7) est inséré de manière coulissante à l'intérieur dudit moyeu creux avec un accouplement étanche cylindre/piston et
- ledit piston mobile étant inséré dans ledit moyeu creux (14) à partir d'une première extrémité supérieure et lesdits passages de fluide sont formés au niveau de l'extrémité supérieure opposée dudit moyeu creux (14).
